# EUROPEAN PATENT SPECIFICATION

(11) **EP 1 169 836 B1**
(45) Date of publication and mention of the grant of the patent: **16.07.2003**
(21) Application number: 00926086.0
(22) Date of filing: 18.04.2000
(51) Int. Cl.: H04L 29/06, H04B 7/185

(54) **SYSTEM AND METHOD FOR DYNAMIC TIME AND BANDWIDTH ALLOCATION**
SYSTEM UND VERFAHREN ZUR DYNAMISCHEN ZUTEILUNG DER ZEIT UND BANDBREITE
SYSTEME ET PROCEDE POUR ATTRIBUTION DYNAMIQUE DES TRANCHES DE TEMPS ET DES LARGEURS DE BANDE

(30) Priority: 18.04.1999 US 129988 P
(43) Date of publication of application: 09.01.2002
(73) Proprietor: Video Networks Incorporated, Roswell, GA 30076 (US)
(72) Inventor: FABIANO, Leonard, J., III, Alpharetta, GA 30022 (US); MAI, Khanh, Alpharetta, GA 30005 (US); HRASTAR, Scott, E., Duluth, GA 30097 (US); ROSE, Steven, W., Hallimaile, HI 96768 (US); WARD, Michael, K., North Potomac, MD 20878 (US)
(74) Representative: Weston, Robert Dale
(86) International application number: US0010394
(87) International publication number: WO00067449

(56) References cited:
- US-A- 4 009 344
- US-A- 4 599 720
- MARSHALL JAMES W ET AL: "MIXED CHANNEL RESOURCE ALLOCATION ANALYSIS" PROCEEDINGS OF THE ANNUAL MILITARY COMMUNICATIONS CONFERENCE (MILCOM),US,NEW YORK, IEEE, vol. CONF. 12, 11 October 1993 (1993-10-11), pages 983-987, XP000410899

## Description

This invention claims priority to U.S. provisional application serial no. 60/129,988, filed April 18, 1999.

### Field of the Invention

The present invention generally relates to satellite data networks, and more particularly, to systems and methods for managing two-way satellite data network systems through a centralized central server utilizing a terrestrial link. Methods and systems are also disclosed for dynamic bandwidth allocation using a hybrid rate allocation and time-slicing mechanism with distributed, hierarchical control.

### Background of the Invention

Data communication via satellite has grown with leaps and bounds recently. That growth has reduced transmission costs and increased usage - but at the cost of bandwidth congestion. In part, the congestion is due to an operation environment that utilizes static channel assignments with scheduling based on manual time reservation mechanisms.

For example, in the past, distributing television, cable and other video/sound files to local stations around the country has been done by manually scheduling the feeds. Typically, a satellite transmitter has a fixed allocation of bandwidth and, if a user needs to transmit 10 minutes worth of data, the user would manually place a phone call to a provider and say I would like 10 minutes of transponder time at 4: 00 p.m. This negotiation for transponder time is time consuming and inefficient and may result in the user being forced to purchase an hour's worth of transponder time when all he needs is 10 minutes. Consequently, once the user finishes transmitting his data, the transponder sits dormant for the remaining 50 minutes, which results in wasted capacity. Currently, no providers have a system that promotes the efficient use of transponder time through the reuse and sharing of previously dedicated facilities.

Attempts in the past to efficiently allocate resources include U.S. Patent No. 4,009,344, in which each station computes its own new assignment based on the presently-known demands at that location. The computed assignment is a trial assignment which is sent over an order wire channel to all other stations to determine if conflicting assignments have been made. After a predefined time delay has expired to allow for adjustments, all of the new assignments are executed simultaneously. However, this reference discloses an early version of TDMA that only allocates bandwidth to multiple users using a predetermined frame size or portion of time.

Another attempt includes U.S. Patent No. 4,599,720, in which a time synchronized burst modem, one at each earth station in a system, transfers TDMA frame timing signals to an interconnected data processing machine. The machine is then capable of synchronizing information transfer to the modem in accordance with the TDMA frame timing signals. However, this reference again discloses the use of fixed, or predetermined time slots that conventional TDMA systems and methods provide.

Yet another attempt is disclosed by Marshall, et al. in "Mixed Channel Resource Allocation Analysis", Proceedings of the Annual Military Communications Conference (MILCOM), IEEE, Conf. 12, 11 October 1993, pp. 983-987, in which a mixture of ECCM, TDMA, and FDMA signal traffic is combined on the same transponder. However, the TDMA and FDMA signals are kept on different channels of the same transponder, and does not provide efficient allocation of network resources.

Some alternative satellite providers are looking at reliable multicast. transmission to be a key technology that can be used to minimize network traffic. Coordination is a major problem with multicast file distribution over a satellite. In other words, how can many content providers (e.g., channels, news organizations, etc.) distribute their content without overwhelming the network bandwidth? This is especially a problem where bandwidth allocation is handled through a manual system.

A second problem in multicasting files over a satellite communications network is that you cannot determine exactly when your file is sent. No one can know with certainty when a particular transmission will end. In the past, people have dealt with this problem by statistically evaluating the data transmission information to determine a statistical end point over time. That is, by looking at a number of transmissions after the fact, one can figure out how many actually went through on time. Usually, that percentage is very high - in the 90% range. It can be made even higher, but the-trade-off typically is, a less efficient use of satellite transponder time., In other words, if you want to really know that your file is going to be sent over the satellite when you schedule it, you need, overall, to schedule less traffic than the system can handle. In essence, this is very like what a doctor does in scheduling patient appointments - if the doctor wants to make sure he sees the maximum number of patients she will schedule lots of appointments over the day. But, as the day progresses, the delay between when the doctor sees the patients and the patients' appointment times lengthens. The doctor can fix this by reducing the number of appointments, but then the doctor runs the risk of having some down time during which no patient is scheduled.

In any event, if bandwidth is allocated based on these statistical averages, inevitably some jobs will not be completed within the allocated transmission time. Skilled persons in this area say this means that your file completion times are "non-deterministic." The non-deterministic file transmission causes scheduling difficulties in projecting future start times for other data transmission. This can be a critical problem. For instance, consider a breaking news story, such as a presidential news conference, that a network wants to make sure gets out across the country to various local affiliates. It is critical that the network knows that at the set time the news story will be transmitted. You would normally think that to guarantee files are sent on time, and thus solve the scheduling problems described above, one could just increase the rate the data is sent over the satellite. But this brings up another problem with multicast - data throughput varies: For example, suppose five out of six cable headends where the cable equipment operators maintain their equipment have state of the art, well maintained equipment that can receive data at 10OMbps (one MBps is equivalent to one million bits of data per second). One of the six head ends can only receive data at 10Mbps. In this situation, if all six need to receive the file within a certain designated time, increasing transmission bandwidth will not guarantee a transmission stop time because there is a "weak link in the chain," namely the 10 Mbps head end. Thus, transmissions must be made using a "dynamic" allocation of bandwidth and transmission time that accounts for the varying throughput of various system components. An allocation is dynamic if the system can change the time slice or data rate of the transmission.

Therefore, conventional systems and methods do not provide efficient or optimum resource allocation when multiple local demands are placed on a control system. This invention provides a distributed-hierarchical scheduling control system that monitors the network and adapts dynamic rate allocation, time slicing and logical framing to optimize system resources.

### Summary of the Invention

This invention addresses these issues by introducing dynamic rate allocation, dynamic time slicing and logical framing, and a distributed, hierarchical control system. According to the methods and systems of this invention, adaptive network programming optimizes resource allocation. This document briefly describes systems and methods for the effective sharing of a satellite transponder between multiple satellite uplink stations using out-of-band terrestrial signaling/control. Using an out of band communication link such as a separate communications network like the Internet, VSAT, or frame relay with an efficient protocol, transponder sharing among satellite uplink stations can be controlled and automated. The automation process will minimize idle time, which means additional satellite capacity for the users.

The present invention advantageously enables a distributed set of uplink station facilities to efficiently share an outbound satellite link without requiring the expense of two-way RF or satellite transmission. Requests and resulting channel assignments are specified in terms of-scheduled transmission times within a variable time horizon. Accordingly, the system can offer either a scheduled batch transmission service mode or an interleaved, time division multiple access mode. The master arbitration server provides a master docking reference for synchronization. This clocking reference may be generated from a highly accurate local reference (*e.g*., an atomic dock) or may be slaved to an external source, such as the GPS network.

This invention effectively shares a limited amount of satellite resources with multiple remote sites and satellite transmitters. Using an out of band control in accordance with the present invention supports use of the satellite transponder for either analog video or high-speed data transfers. Two way data communication is also possible using the satellite for the outgoing high-speed data transfer and the control path as the return data path, and "path-switching" between two or more transmission sites in a half-duplex communications fashion.

Among other objectives, this invention aims to overcome the problems of the current environment of satellite transmissions that use static channel assignments, with scheduling based on manual time reservation mechanisms. The non-deterministic file distribution predictions available under prior systems causes scheduling difficulty in that future start times cannot be precisely predicted. On the other hand, because multicast throughput is variable, multicast file distribution that is based only on changing the rate or band width of the connection still does not solve the problem.

In one embodiment, this invention uses a system of master and sub-controllers to overlay, adaptively, dynamically or both, rate and time slice allocations upon a common set of network transport resources. These network transfer resources may be in the form of wireline, wireless, satellite or other communications network capacity. A master arbitration server receives access requests from multiple local (or remote) controllers, each of which desires to schedule a file transmission over a communications resource such as a satellite. The access requests include information that the master arbitration server uses to assess the priority of the file transmission. A schedule for satellite use is set based on this information. The master arbitration server returns to each local arbitration server information concerning the time slice to which they will have access to the satellite transponder for using satellite capacity.

Local arbitration servers, in turn, have authority over their use of the time slice assigned for their use. The local arbitration servers may subdivide their time slices based on their local needs and the priorities of the files they need transferred, resulting in a file transmission scheme that is similar to a time division multiplexed scheme. In addition, however, the local arbitration servers also may set the file transmission rate (e.g., bandwidth) to be assigned a particular transmission. In essence, this system provides an overlay of time slicing and rate allocation by which the distributed control system can specify a window of time and a rate in order to ensure better file transmission.

Another advantage to using local arbitration servers is the distributed intelligence achieved in the system allows for dynamic reaction to events. This is best explained by example. Past transmission system schemes have static retransmission schema. Thus, the system might try to send a file 7 times before giving up. The problem with this approach is that the static schemes add to network rigidity. The system can become unstable because it receives problem jobs that require retries and then either delay other jobs, causing a ripple effect on-the schedule, or simply do not get sent Meanwhile, new jobs are entering the system for transmission. The local arbitration servers of this invention allow the system dynamically to decide whether to keep trying to send a particular file or job or whether to move on to the next file. Also, the local arbitration servers can decide to send part of the file now and hold the rest for transmission in another time slice, resulting in the local arbitration server efficiently using some of the assigned capacity and getting at least a portion of the file complete. By using a system having a master arbitration server and a number of local arbitration servers, this invention promotes efficient reuse and sharing of previously dedicated network transport resources.

The invention may be adapted for using an internet protocol ("IP") multicast-based service for distributing various files. This service achieves large-scale distribution of the files, such as media files comprising shows, commercials, news events, sport events, etc., via an IP multicast within an adaptive reliability layer. The master and local arbitration servers bounce the use of network transport resources with the respective priorities and service commitments associated with each file or set of files that need to be distributed over the next system.

This system may be implemented by coupling a master arbitration server to a communications network that allows the master arbitration server to communicate with various local arbitration servers, each of which are associated with a portion of the network transport facilities. For instance, a local arbitration server may be associated with a satellite transmitter and the appropriate hardware necessary to package the data for satellite transmission. The master arbitration server may comprise a scheduling server that sets the basic distribution times for a file or set of files. The master arbitration server may assign a time slice and channel to a particular file. The master arbitration server forwards that assignment data to the local arbitration server. The local arbitration server, depending upon the other jobs it receives and/or network traffic data, will itself adaptively assign each of the multiple jobs a particular rate and, if appropriate, may further divide the time slices to which each job is assigned. The local arbitration server thereby dynamically and adaptively overlays rate allocation upon the initial time slice assigned by the master arbitration server.

Another aspect of this invention involves determining the rate at which files may be broadcast. As skilled persons will recognize, bottlenecks in multicasting occur on communication links. Additionally, however, bottlenecks occur because of the servers and clients receiving the files. For instance, each time a client computer opens a new application, that application detracts from the client computer resources otherwise available for accepting files, which, in turn, decreases the rate that the client computer can receive file transfers. By providing feedback on the data rates handled by portions of the communications network, including both the communications link and the clients receiving the files, the present invention can further improve multicast file transfer performance.

Accordingly, using the methods and systems of this invention achieves at least one, more or combinations of the following advantages. The invention:
- Can maximize the number of files transmitted to the maximum number of sites successfully at the highest rate possible.
- Utilizes two degrees of freedom (rate and time) to manage priority and non-priority data transfers.
- Provides best-effort and guaranteed service levels.
- Utilizes distributed control and hierarchical bandwidth management agents.
- Utilizes network management statistics to adapt bandwidth allocation.
- Can emulate rate-proportional sharing (TCP/IP) for IP multicast.
- Can be deployed above standard RF media access control mechanisms.

Other objects, features and advantages of this invention will become apparent from the rest of this document, including the Figures.

### Brief Description of the Drawings

Fig. 1 is a diagram showing an exemplary topology for one embodiment of the system of the present invention.
Fig. 2 provides additional detail of system components and resources that can be used to implement the embodiment shown in Fig. 1.
Fig. 3 is a schematic diagram showing the interrelationships between the local arbitration servers and the master arbitration server of the present invention.
Fig. 4 is a logic diagram depicting one method for managing the channel, rate-time and band width hierarchy of various files to be multicast according to the present invention.
Fig. 5 is a broad overview showing the logical coupling point of several components of the system of the present invention.
Fig. 6 is an overlay depicting the dynamic rate-time allocation for multicast file distribution that is accomplished according to the methods and systems of this invention.
Fig. 7 depicts the priority queuing and bandwidth allocation performed by the multicast server according to the methods and systems of the present invention.
Fig. 8 is a high level diagram depicting the interrelationship between the master arbitration server and various local arbitration servers.
Fig. 9 depicts one request-grant protocol for implementing aspects of the present invention.

Fig. 10 is a logic diagram depicting the adaptation mechanism by which the methods and systems of the present invention adapt to varying network conditions in order more efficiently to distribute files.

### Detailed Description of the Drawings

Before describing the drawings and embodiments in more detail, several terms are described below in an effort to clarify the terminology used in this document. Additional and fuller understanding of these terms will be dear to persons skilled in this art upon reading this entire document.
- 100baseT: Ethernet network 100 megabit per second interconnection.
- Client: A client is a program, which interacts with a Server program that may be on a remote machine.
- CRC: Cyclic Redundancy Check - a type of checksum used to validate data, generally after storage or transport
- DNS: Domain Name System
- DVB: Digital Video Broadcast
- EDI: Electronic Data Interchange
- FDM: Frequency Division Multiplexing
- IP: Internet Protocol
- Local Arbitration Server this is a computer, such as a workstation, which runs software to allow it to determine which jobs to put into the queue on what schedule and on what bandwidth. The local arbitration server has a view of the demand for the resources locally.
- Master Arbitration Server this is a computer, such as a workstation, running network control software that manages overall resources and has a scheduling function. The master arbitration server allocates channels, an aggregate rate and/or an aggregate time slice. The master arbitration server "arbitrates" between the requests for satellite resources made by various content providers, the network capabilities and the local arbitration servers.
- Multicast: a process of sending a transmission to a selected subset of recipients (as opposed to point to point, or broadcast).
- MPEG2: Second generation digital video compression and transmission standard formalized by the Moving Pictures Experts Group.
- NT: Short for Windows NT Server, an operating system from Microsoft Corporation.
- Out of Band: Not transmitted with the signal in question. May be on a different frequency, or by another means altogether (e.g. Internet vs. satellite).
- PIDs: Program Identifiers as defined by MPEG.
- Priority Information: this refers to information that the arbitration servers may use in order to assign a particular priority to a job. The information can be as simple as a pre-assigned priority code and delivery time to more detailed information, such as the credit worthiness of the sender, the volume of business provided by the sender, the value of the information, whether the sender will pay a surcharge for a particular service guarantee, etc. With such information in hand skilled persons will recognize that the servers or associated programs may assign a priority. An additional factor to note concerning priority information is that while a request may contain some priority information, other priority information may be stored at the server and used in assigning the ultimate priority.
- QPSK: Quadrature Phase Shift Keying
- Scheduler A program that guarantees that requested content has been successfully transmitted as scheduled.
- Server A program that provides specific services to clients (e.g. database or protocol management). It is frequently is important enough (or busy enough) to run alone on a dedicated machine.
- Signaling Channel: A separate channel used to control activity on other channels, or other processes.
- TDM: Time Division Multiplexing
- Uplink station: this refers to an aggregation of equipment for transmitting (or even receiving). Each station may contain data communications equipment for communicating with a network or computer to receive files, upconversion equipment, an RF amplifier and the actual transmit dish.
- WWW: World Wide Web, an Internet hypermedia application.

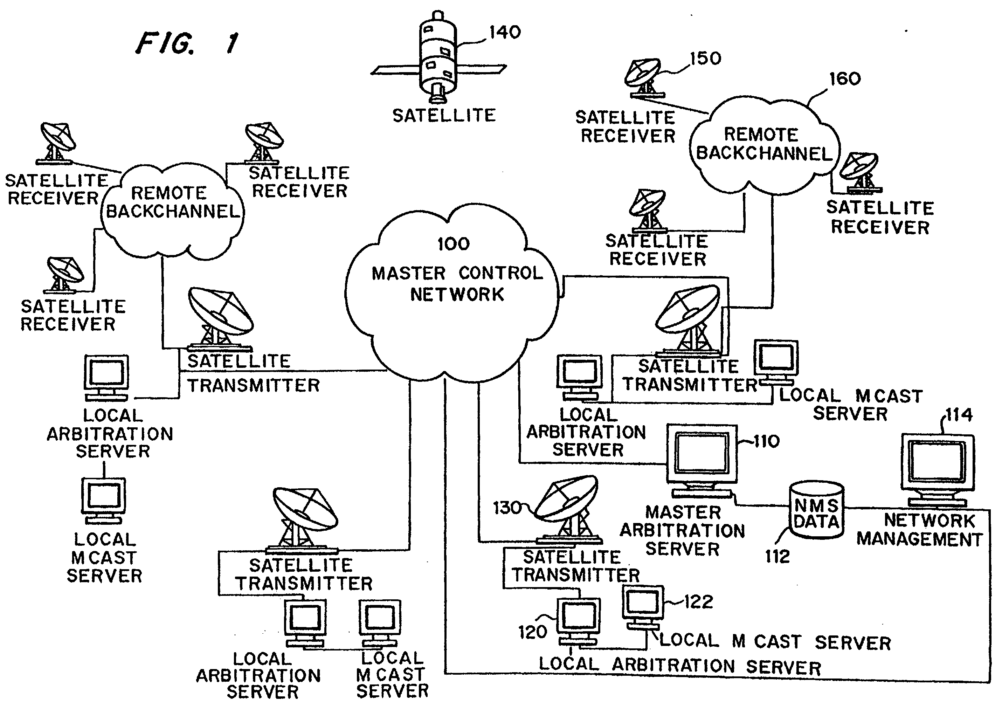

### Overview Of The Present Invention (Figs. 1-3):

Fig. 1 depicts various components comprising a portion of the architecture of the system of this invention. A master control network 100 allows a master arbitration server 110 to control various local arbitration servers 120. Each of the local arbitration servers 120 is coupled to a local multicast server 122 and to a satellite transmitter 130. Each of the local multicast servers 122 store the content that is to be distributed via the network transport facilities such as the satellite network shown in Figure 1. In concept, Figure 1 shows a distributed, hierarchical system in which each satellite transmitter 130 has a set of clients comprising various satellite receivers 150. The satellite transmitters 130 in turn have local multicast servers 122 that acts as a scheduler and a local arbitration server 120. Note that the functionality of the multicast servers 122 and bandwidth manager 120 can be implemented on one or multiple workstations or computer platforms.

The satellite transmitter 130 communicates via satellite 140 to various satellite receivers 150 that couple via remote backchannel 160 to the local arbitration servers 120 and master bandwidth manger 110. Master arbitration server 110 couples to a database 112 supplied with network management data via a network management subsystem 114. The master control network 100 allows for out-of-band interconnection between various components of the system shown in Fig. 1. For instance, the master control network 100 can be a communications network configured for TCP/IP, VSAT, frame relay, ATM, or internet communications. Similarly, remote backchannel 160 can be a backchannel for receiving downlink information (e.g., confirmation of file receipt/transmission status) that can be a communications network such as a packet switched network or the internet.

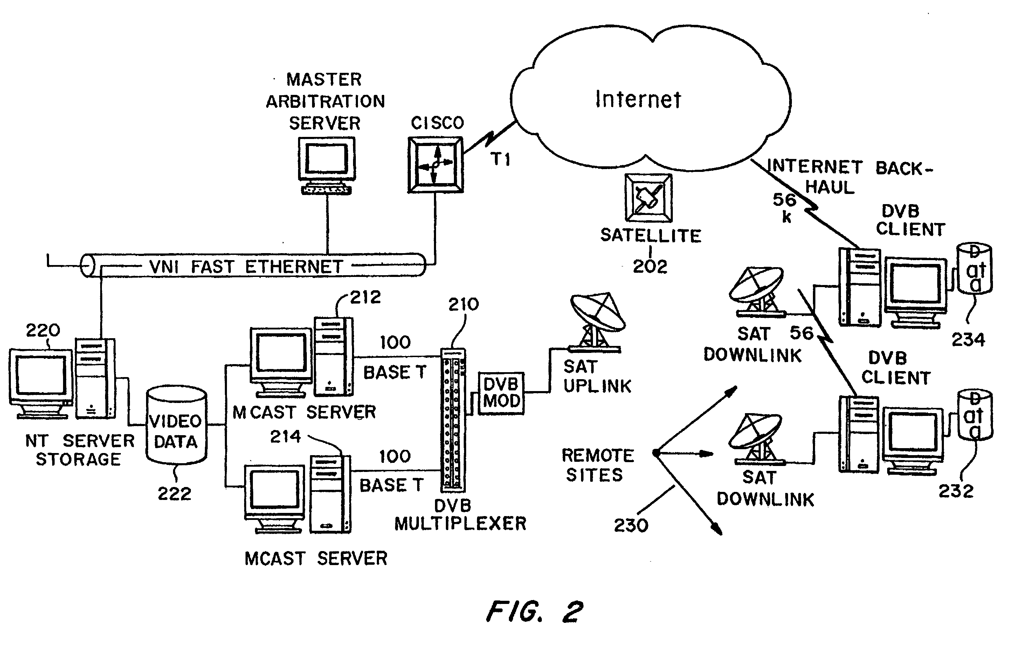

Figure 2 shows one implementation of the architecture shown in Figure 1. Figure 2 shows an implementation of the control system of the present invention in which multiple satellite uplink stations 210 share unidirectional satellite 202 bandwidth by scheduling access for uplinking earth stations 210 via a central server 220 placed in a centralized location for storing video data 222. Each of the uplinking earth stations 210 has access to the central server 220 through the Internet (or some other suitable communications link). The central server 220 may control the allocation of bandwidth within one transponder, the allocation of multiple transponders on one satellite, and/or the allocation of bandwidth across multiple satellites 202.

Each uplink station 210 comprises satellite transmission and formatting equipment known to persons skilled in the art. Associated with the uplink stations 210 are one or more local multicast servers 212, 214, each of which provides the access control at the earth uplink station 210 and local storage for data 222 to be transmitted over the satellite 202. The multicast servers 212, 214 have access to the Internet (or other suitable communications pathway) for communications with the central server 220, via a local signaling server. In addition, the uplinking earth station 210 site may have satellite modem equipment connected to the local multicast server and satellite earth station transmission equipment. The central server 220 will schedule access for any individual, local multicast server 212, 214, placed at any uplinking earth station 210. An illustrative embodiment of a control system architecture in accordance with the present invention is illustrated in Figure 2 wherein two of a possible plurality of uplinks are shown.

Each of the local multicast servers 212, 214 may store packetized data in files. Each file can be selected individually for transmission or grouped together for transmission in a batch mode. Once a file has been selected for transmission, a selected protocol is followed for transmission.

For instance, the local multicast server 212 may request a transmission window from the central server 220. master arbitration server 220 prioritizes communications across the satellite 202 resources available. Access to the satellite 202 resources can be granted on a "first-come first-serve basis" or any number of priority schemes to provide a particular guaranteed quality of service (QOS). The central server 220 also may incorporate a bandwidth management system, which makes sure that the available satellite resource is never over-subscribed. In one protocol according to this invention, the central server 220 may provide the requesting local multicast server 212 a message detailing the transmission window for the particular file transmission. The central server 220 authorizes the actual transmission over the satellite 202 by sending an authorization message for the designated satellite resource to the local multicast server 212 that is scheduled to transmit. No local multicast server may begin transmitting data through the satellite resource unless it has received the authorizing message, and not until the authorized start time. The control system uses authorizing messages as the methodology to insure that only one uplinking earth station is accessing the satellite 202 resources at any given moment.

After it has received the authorizing message from the central server 220, the multicast server 212 manages the transmission of the data through the satellite transponder. At the exact authorized time, the carrier for the uplink station's 210 is enabled and the output of the multicast server 212 feeds to the uplinking earth station's 210's modulation equipment After it is modulated, it is then upconverted and amplified for transmission through the satellite 202 transponder. Any number of applications can be used to manage the flow of data over the satellite. Protocols known to skilled persons in this field can be employed to selectively retransmit data that was corrupted before being received by the earth stations.

The multicast server uses the Internet (or another suitable communications pathway) for communications with the receive stations or "clients." After it schedules a transmission with the central server 220, it contacts the client sites 230 through an open multicast group address. The open group is contacted and the members of the smaller transmission group are instructed to begin "listening" to a satellite resource for the transmission. Once switched to the new dosed group address each client in the newly formed "closed group" is instructed to register with the multicast server 212, 214 that initiated the session. The server's IP address for this response is passed during the registration process. This response occurs over the Internet (or another suitable communications path for return data) and that client (or receive site 232, 234) can now begin to receive the multicast data being distributed in that particular closed session.

While a local multicast server 212, 214 is authorized to transmit, the central server 220 may send it an update message allocating increased or reduced bandwidth and / or changing its frequency assignment. It may even ask the local multicast server 212 to pause its transmission. The multicast server 212 then takes appropriate steps to cause its group to make this change, and then return an acknowledgment message to the central server 220. This allows the central server 220 to handle higher priority QOS requests, and to prevent the fragmentation of bandwidth within a transponder. If the multicast server 212 finishes earlier than its allotted time, it may notify the central server 220 of its intent to relinquish the time remaining. This allows the central server 220 to reallocate that time. It must leave its carrier on until it receives an updated authorization message from the central server 220 telling it the exact time that it must turn off its carrier. It may request additional time in the same manner, but the transaction granting additional time must be completed before the end time of the original authorization. The multicast server 212 should shut down its carrier at the exact time specified in the current authorization message.

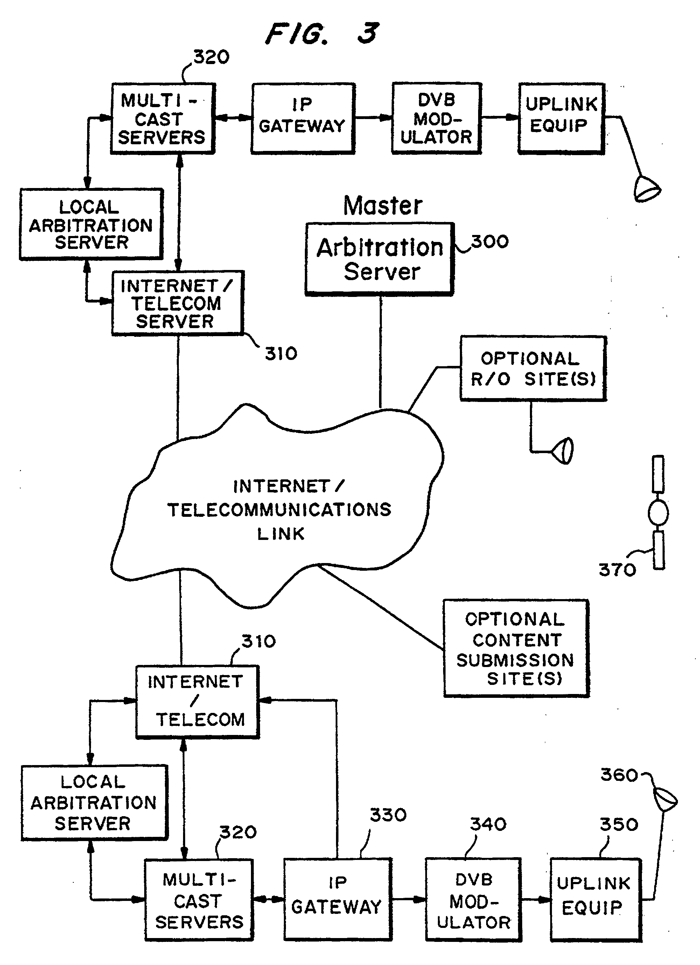

Figure 3 presents a summary of the architecture of one system for implementing this invention. A master arbitration server 300, which arbitrates amongst the various requests for satellite uplink time and the local-arbitration servers 302, couples via a communications network 310 to various multicast servers 320 located remotely from the arbitration server 300. Through an IP gateway 330, the servers 320 push content into a standard DVB modulator 340 for uplinking over equipment 350 on the schedule and at the rate dictated, as described below, by the master and local arbitration servers. The uplink station has various components including the modulator 340, uplink equipment 350, or dish 360 for transmitting files to satellite 370.

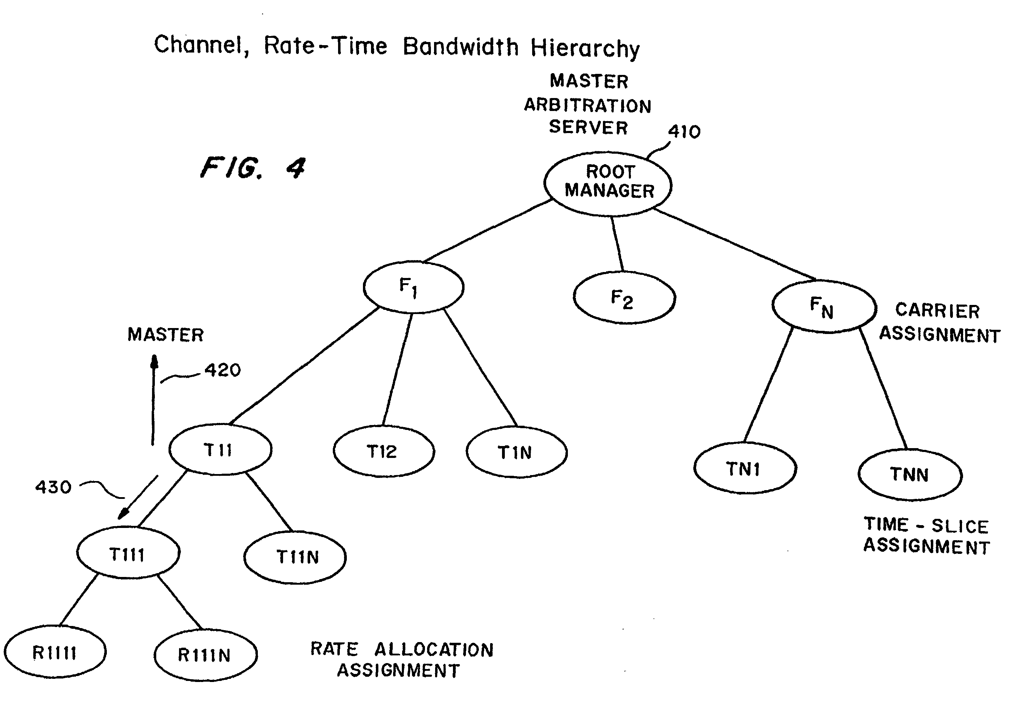

### Dynamic Bandwidth and TimeSlice Allocation (Figs. 4-9):

Figure 4 shows a logical overview of a method of this invention for dynamically allocating files rates and times for transmission over network transport resources such as a satellite. Figure 4 depicts a distributed control hierarchy in which the steps in area 430 are carried out by a master arbitration server 410 and the steps in area 430 are carried out by the local arbitration servers. Master arbitration server 410 receives multiple requests for distributing content and assigns each request a specific channel, represented by frequencies F1, F2, Fn. Each channel has a number of time slots to which the master arbitration server 410 assigns particular jobs. Thus, master arbitration server 410 subdivides channel I into time slots T1 1, T1 2, T1 n, in which the first subscript represents the channel and the second represents the time slice. The master arbitration server 410 may maintain a database describing the capacity on each channel available to the network.

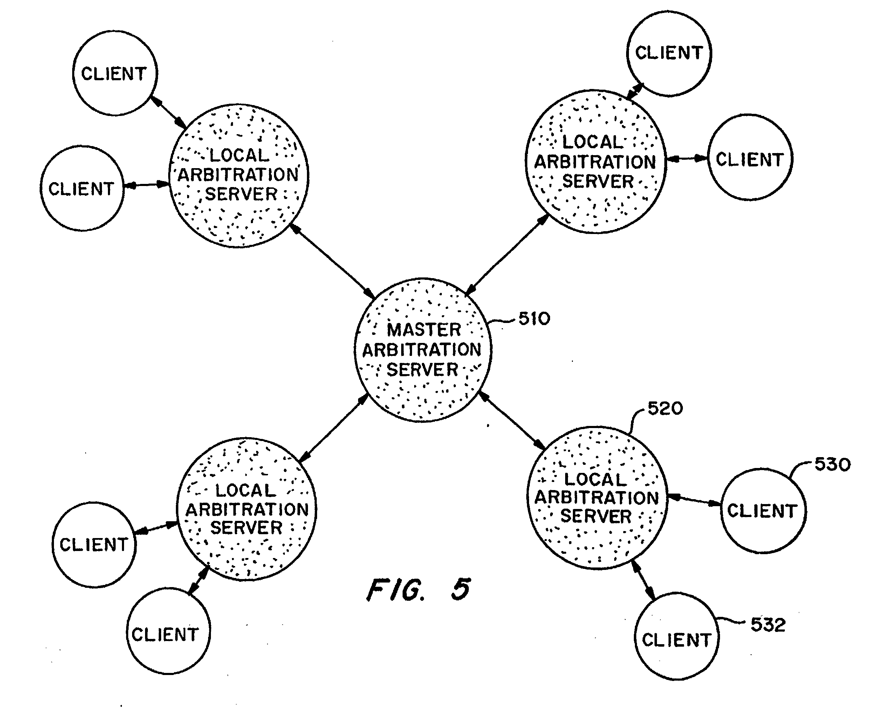

Local arbitration servers receive from the master arbitration server the initial time and channel information, as well as an initial amount of bandwidth. Therafter, each local arbitration server assigns its jobs a rate and may further subdivide the jobs into different time slots and at different rates to make more efficient use of the resources allocated to that local arbitration server. Thus, Figure 4 shows in area 430 where local arbitration servers add rate designator 1 to channel 1, time slot 1, resulting in a T111 to T11n different rates applied to the first time slot in the first channel. By way of example, suppose in Figure 4 that the master arbitration server 410 assigns a 30 second time slice to channel 1. Hierarchically, as seen in Figure 5, the next level is controlled by the local arbitration servers 520, each of which communicate with the master arbitration server 510 (the same as server 410 in Figure 4) and various clients 530, 532 that comprise, e.g., the uplink stations or local multicast servers. Each local arbitration server 520 assigns a rate and may further subdivide the time slot into two slots of 15 seconds apiece at a rate of 5 Mbps each. Without the further time slicing, the system would be at the mercy of the random errors always present in file transmission, with the result that an error may occur and delay the job.

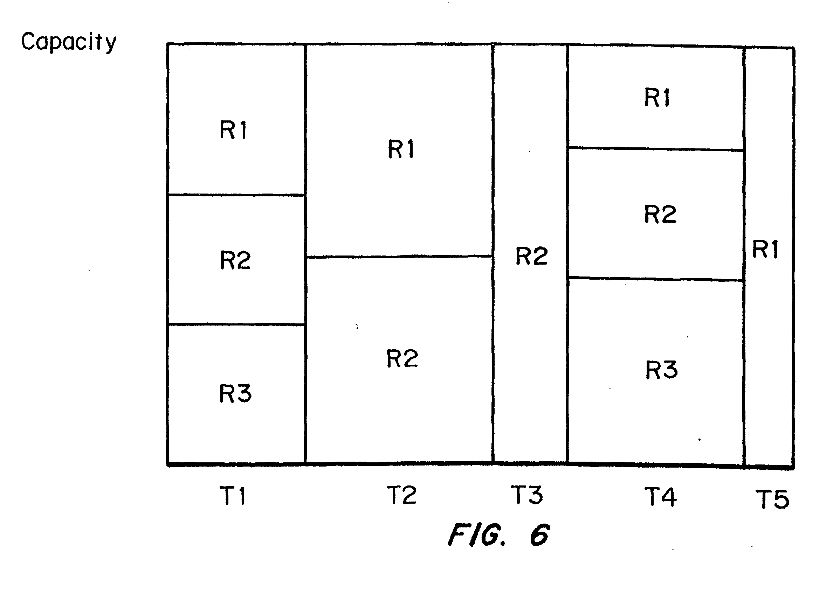

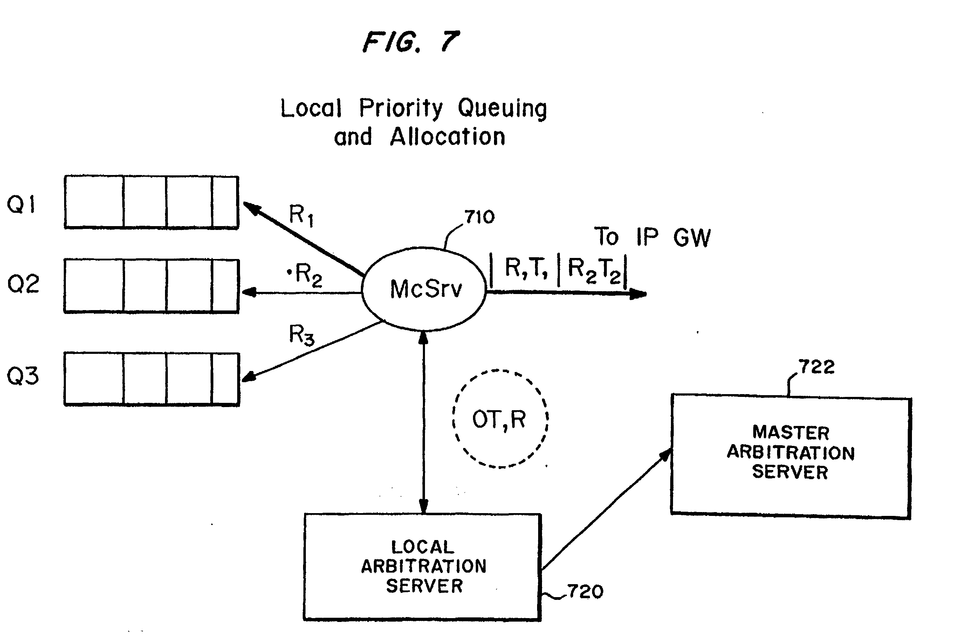

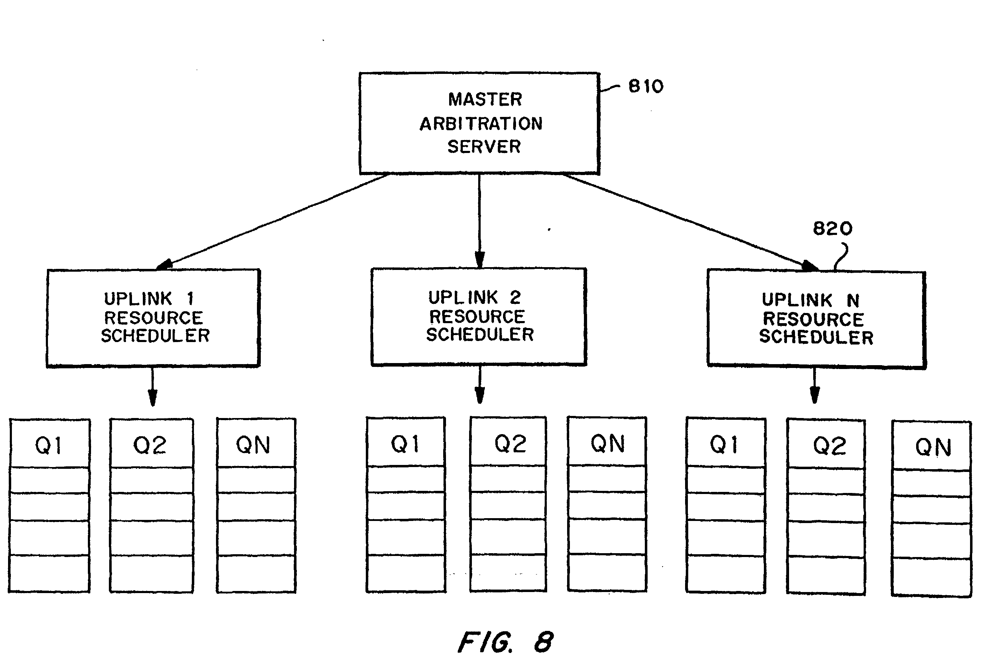

Figure 6 attempts to capture the degrees of freedom the hierarchical system of this invention provides in allocating rate and time to multicast file distribution. The columns shown in Figure 6 represent the different rates assigned whereas the rows represent the time slots. So, for each frequency, there is rate and time multiplexing of the IP packets in which the files are subdivided. Figures 7 and 8similarly shows how the local and master arbitration servers 720 and 722 (or 810, 820 in Figure 8) interact with the local multicast server 710 (which provides the content for transmission) in order to create a priority queue comprising the rate and time allocation for various jobs.

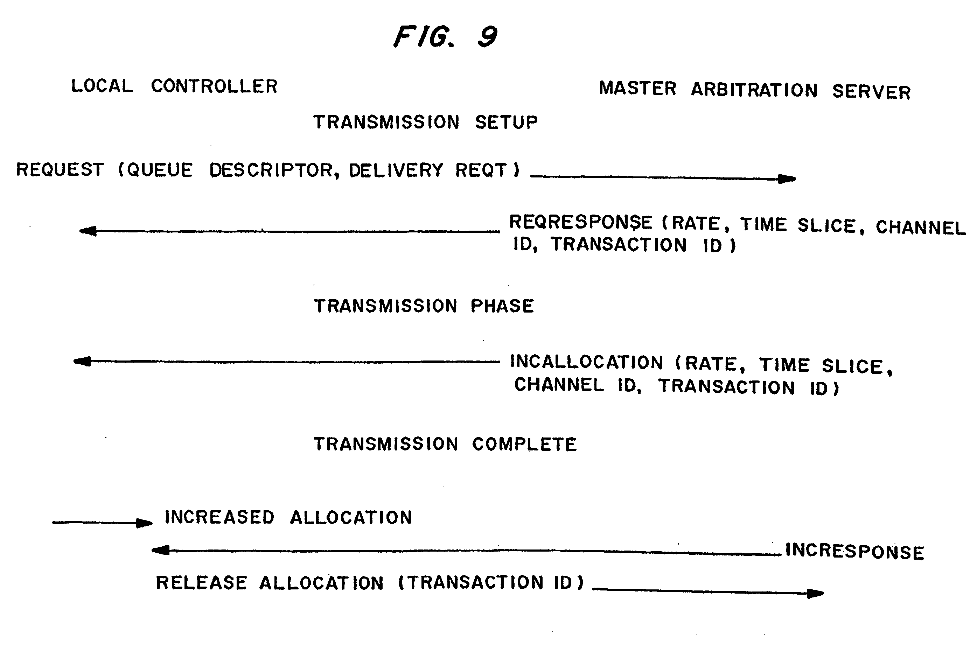

Figure 9 depicts a particular implementation of a request/grant protocol by which the local arbitration servers inform the master of their need for new allocations. As seen in Figure 9, in the Transmission Setup phase, the client that desires to send the job first sends a Request. In this instance, the client may be the local arbitration server, which has received a request for file transmission and priority information associated therewith. The request from local to master arbitration server provides a Queue Descriptor detailing priority information on the job, as well as a Delivery Request indicating completion time. The master arbitration server, which knows of the demands on the overall network, receives multiple Requests from multiple clients. It analyzes, prioritizes and schedules the requests based on network resources, performance and request priority data. It then forwards to each of the local arbitration servers a Request Response setting the rate, timeslice, channel ID (e.g., frequency) and a transaction ID for tracking purposes.

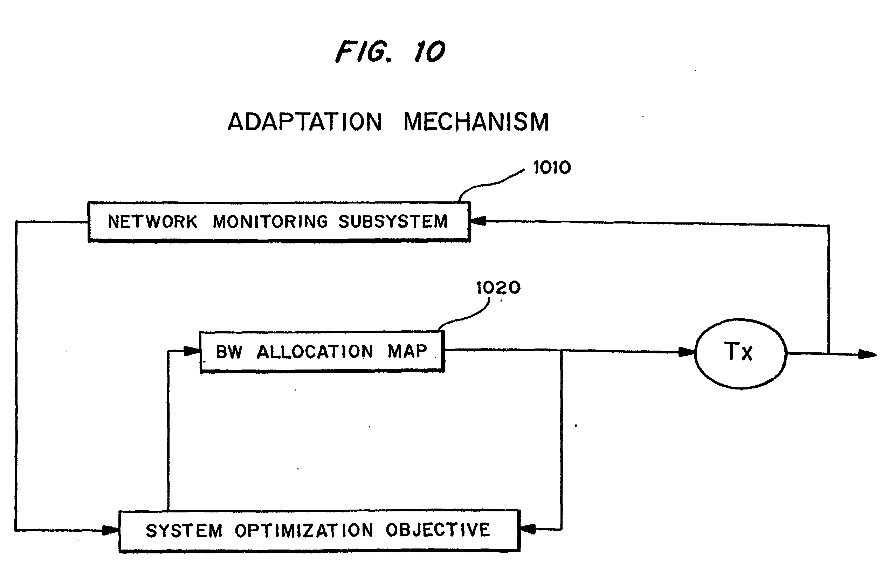

Next, the transmission is scheduled and made by the local arbitration server and associated equipment. It may be that during or after the transmission the master arbitration server may recognize that the local arbitration server needs more capacity to complete its particular job. For example, the master arbitration server may have sent the local arbitration server only enough network transport capacity to complete part of the job in question, noted that deficiency and looked for additional system resources to allow transmission of the remainder of the file. Or, the master arbitration server may have received information concerning resource performance in the network (see Figure 10) that caused it to reassess whether the released resources are sufficient In either instance, the master arbitration server automatically sends an Incremental Allocation to the local arbitration server authorizing it additional bandwidth (e.g., rate) or time on the same or a different channel. Conversely, the local arbitration server also can ask the master via an Incremental Request Allocation for additional bandwidth, time, channel capacity etc., based on the demands and performance of the local resources at its disposal. Again, a unique transaction ID will be exchanged as part of these request/grant protocols, as well as appropriate job information such as file size remaining for transport, etc.

Using these techniques, the system of this invention provides much greater flexibility for file transport For instance, instead of requiring the local resources to be tied up while trying to complete a file transmission a set number of times, during which other files or pieces thereof cannot be sent over the network resource, using this invention allows the local arbitration servers intelligently to adapt to network conditions. In that manner, the local arbitration servers can decide to send a portion of the packetized file and schedule the remainder for later or decide to switch to another job altogether. This flexibility makes greater use of local resources since the local arbitration servers can ensure that any "gaps" in capacity are filled with pieces of jobs. Meanwhile, the master arbitration server still maintains control over the overall use of network resources and is able to build a picture of network usage and capacity based on the requests for reallocations generated by the local arbitration servers.

### Adaptive Bandwidth and TimeSlice Allocation (Fig. 10)

Figure 10 details another aspect of this invention. In any communications network, it is important to monitor the performance of various network resources, such as switches, routers, links and the like. This invention also adapts to changes in network conditions whereby the monitoring information alerts the master arbitration server to the network conditions changes. By way of example, Figure 10 schematically shows a simplified feedback loop whereby the scheduler, e.g., the master arbitration server, receives information from a network monitoring subsystem 1010, such as Solaris Openview or the like, that provides a traffic data feed concerning network conditions. That information is compared with the system optimization objectives, such as quality of service, use of capacity, etc. Together those parameters are taken into account by the master arbitration server as it sets its initial schedule or bandwidth allocation map 1020. Of course, each local arbitration server also may receive a data feed describing general network conditions or the performance and capacity of the communications equipment associated with that local arbitration server.

### Time Division Multiplexing Operation

Another mode of operation of the central server and Signaling System Servers of the present invention allows a Time Division Multiplex (TDM) mode of operation, giving each uplink station a periodic fixed time slice on a round robin basis. The duration of the time slice may depend in each case on, among other things, the capabilities of the uplink station to begin, conduct, and end its transmission, but could be measured in milliseconds or microseconds. Each uplink station has an absolute time reference (such as GPS) which allows its exact synchronization with other uplink stations. The transit time from each uplink station to the satellite in use is fixed by the physical location of the uplink station relative to the satellite's orbit. It is therefore possible for the master arbitration server to tell each uplink station when to begin and end its transmissions such that the transmissions from all of the uplink station in the TDM group are concatenated as closely as possible upon their arrival at the satellite.

The authorizing message sent from the master arbitration server to each uplink station for TDM operation includes the starting time and ending time as usual, and also includes the exact time slice duration and period (the time from one time slice for this uplink station until the next). All local calculations of transmit intervals are absolutely deterministic, so that all uplink stations in the group remain in absolute synchronism throughout the period of the transmission without further interaction from the central server (although update messages, as mentioned above, are allowed).

The advantage of this mode of operation is that it allows a TDM group of almost any size to share a satellite channel for real-time audio or video conferencing or exchange of data, with a single set of uplink / receive equipment. A frequency division multiplexing approach (with each uplink station allocated its own bandwidth) requires separate equipment to receive and transmit to each participant at each location.

### New System Protocol

This section of the document will describe an embodiment of an architecture that supports out-of-band signaling and control for transponder sharing. Using a single controller per channel on a transponder, uplink stations can communicate with the controller to negotiate for transponder capacity. Using TCP/IP as the signaling mechanism will allow for support of dialup connection as well. This should be useful to anyone using a mobile uplink. The controller and the uplink stations may signal each other using the following protocol: Note: (parenthesis indicates state of parameters).

**Table I:**

| **Basic Communication** | |
|---|---|
| master arbitration server | Uplink |
| Idle | Service Request (requested parameters) |
| Service Authorized (granted parameters) | (Uplink In Use) |
| Heartbeat | Heartbeat response |
| ... | Uplink finished (time expired) |
| (Satellite Resource free) | |

**Table II:**

| **Transponder Busy** | |
|---|---|
| master arbitration server | Uplink |
| (In use, no satellite resources available) | Service Request (requested parameters) |
| Transponder Busy (next avail...) | Queue Request (parameters) |
| (Job in Queue) | |
| (Transponder free) | |
| Service Authorized (granted parameters) | (Uplink in use) |
| Heartbeat | Heartbeat response |
| ... | Uplink finished (time expired) |
| (Satellite Resource free) | |

**Table III:**

| **Signaling Channel Broken** | |
|---|---|
| master arbitration server | Uplink |
| (Transponder in use) | (Uplink in use) |
| Heartbeat | Heartbeat response |
| | |
| Heartbeat | (no heartbeat, no response) |
| (Timeout) | (Timeout) |
| (Satellite Resource free) | (Uplink free) |

**Table IV:**

| **Additional Signals** | |
|---|---|
| master arbitration server | Uplink |
| Service interrupted | Uplink stopped |
| (Satellite Resource free) | (Stop transmission, Uplink free) |
| | |
| Status response | Status request |
| | |
| Status request | Status response |

**Table V:**

| **Update from Uplink** | |
|---|---|
| master arbitration server | Uplink |
| (Satellite resource in use) | Update request (new parameters) |
| Changes (new Authorization parameters) | Authorized updated |

**Table VI:**

| **Update from master arbitration server** | |
|---|---|
| master arbitration server | Uplink |
| Update request (new parameters) | Acknowledge receipt |
| | Notify Multicast group (new parameters) via satellite and Internet |
| | Receive acknowledgment from each member of group |
| | Make requested change |
| Update authorization | Acknowledge change accomplished |
| Adjust satellite resource parameters | |

**Table VII:**

| **Other Control Via Web Console User Interface** | |
|---|---|
| Master arbitration server | Uplink |
| Schedule Event | |
| Status | |
| Maintenance | |
| Logs | |
| | |
| IP Data | IP Data (over signaling channel) |

Using IP communication over satellite in one direction requires an IP gateway at the uplink station. Communication can be to any computer system with a DVB satellite card and a modem for creating a return path, although skilled persons will recognize many other implementations (the important thing is that there be some intelligence and a communication pipe for return messages). Either point to point or point to multi-point (multicast) communication can be used. For multicast implementation, the service provider may utilize Video Networks, Inc. (VNI) multicast service or implement one of the methods suggested by the Internet Engineering Task Force (IETF) to minimize retransmission.

In addition to the signaling protocol, adding an API on top of TCPAP may provide TCPAP applications, running at the uplink station, the option selectively to choose which data goes over the Internet or over the high speed satellite network. For example the application programming interface (API) may include an "h-Write" (high speed write) routine which will use the IP over satellite if the transponder is freed. Other routines may include methods for query status of the satellite link. The API will include interfaces to the signaling protocol for requesting the usage of the transponder. The addition of this API will allow IP applications to request for high speed data transfer and then starting the data transfer possibly *over* the signaling channel until the capacity on the transponder is available. Details of the API will also be available in VNI's Shared Transponder Technical Specifications document. Other considerations include:
- Signaling dropped and reconnected
- Extend period of transponder usage which could allow for the signaling. channel to be disconnected during extended one-way data transfer.
- Quality of Service request and signaling control
- Managing of multiple carriers on a transponder.

There are several standard controls, on the modulator, the frequency upconverter, and the high power amplifier, which can be used to control the output of the transmit link. Each makes it possible to bring the transmit link to a state of readiness to transmit data within milliseconds. The appropriate choice of controls is the one that minimizes the latency from the authorized time to begin transmission and the presence of the carrier at the satellite.

In addition to the potential requirement for physical switching, there will be a requirement for synchronization bits at the start of each transmission. A pattern of alternating 1's and 0's similar to the start of an Ethernet data packet (10101010) will be required for some period of time to allow the receiver hardware to lock to a new transmitter on the network. As suggested in the introduction, a synchronization clock between transmitters will also be required. This will help eliminate too lengthy a signal lock delay each time a change of control for the network is introduced.

Out of band signaling over the Internet allows bidirectional half duplex communications (The Internet is used as the control link for the high speed path). As a result, the protocol needs to be expanded with signaling system 7 (SS7) or equivalent protocol for high speed communications. SS7 or the equivalent should be available.

### Illustrative Applications of the Present Invention

There are a number of potential applications of the present invention can be applied whenever there is a need to share a single satellite transponder or a number of satellite links among a network of uplinking earth stations.

### Application I - Scheduled transmission through a single satellite resource

In this application a single uplinking earth station provides transmission services for a number of independent sources through a single satellite resource. The uplinking earth station is the only site that has access to the satellite resource, but there is contention among the sources coupled to the uplinking station for access time to the satellite. In this application, the control system can be used to prioritize and schedule access; to the satellite.

In this example digitized video data is provided by the sources and is stored at the uplinking location in a video server. The system consists of a front-end application allows a user to view, browse, and select files for transmission.

Once a file has been selected for transmission the Multicast Server will request a transmission time for that file from master arbitration server. In this example the Multicast and the master arbitration server may be one and the same since there is only one uplinking station. The Arbitrator server prioritizes communications across the satellite data link.

The Multicast Server uses the Internet (or another suitable communications pathway) for communications with the receive stations or "clients." After it schedules a transmission with the master arbitration server, it contacts the client sites through an open multicast group address. The open group is contacted and the members of the smaller transmission group are instructed to begin "listening" to a satellite resource for the transmission. Once switched to the new closed group address each client in the newly formed "closed group" is instructed to register with the Multicast Server that initiated the session. The server's IP address for this response is passed during the registration process. This response occurs over the Internet (or some other communications path for return data) and that client (or receive site) can now begin to receive the multicast data being distributed in that particular dosed session.

The output of the Multicast Server is fed to an IP gateway. Most manufacturers of DVB transmission cards provide an IP gateway to encapsulate the network traffic within the MPEG2 transport data format before it reaches the satellite transmission modulator. The modulator uses a digital modulation technique to modulate the data. The resulting signal is then upconverted and then amplified for transmission through the satellite to the clients.

### Application 2 - Access to a single transponder by multiple uplinking earth stations

In this application multiple uplinking earth stations require access through a single satellite resource. The uplinking earth stations contend for access time to the satellite resource. The control system can be used manage access to the satellite on a non-interfering basis among a network of independent transmitters.

In this example multiple uplinking sites are transmitting analog video broadcasts to a centralized location using an "occasional use" transponder. The control system has reserved a block of time for the uplinking sites to transmit video back to a central location. The master arbitration server schedules access to the transponder by multiple sites for short periods of time within this block of time.

Each uplinking earth station is outfitted with a Multicast Server, which provides the access control at the earth station. The Multicast Servers may access to the Internet (or another communications pathway) for communications with the master arbitration server. In addition the uplinking earth station site may have satellite modem equipment connected to the Multicast Server and satellite earth station transmission equipment. The master arbitration server will schedule access for any individual Multicast Server placed at any uplinking earth station. The functionality of the local arbitration server described above may reside on the same platform deploying the Multicast Server.

The master arbitration server sends a message back to the requesting Multicast Server / local arbitration server containing its transmission window. The master arbitration server authorizes the actual transmission over the satellite by sending an authorization message for the designated satellite resource to the Multicast Server / local arbitration server that is scheduled to transmit. No transmission may begin over the resource until an authorizing message is received. The master arbitration server uses authorizing messages as the methodology to insure that only one uplinking earth station is accessing the satellite resource at any given moment.

The master arbitration server sends an authorization message, after which the Multicast Server / local arbitration server manages the transmission of the data through the satellite transponder. The output of the Multicast Server / local arbitration server is then fed to the uplinking earth stations modulation equipment and then it is upconverted and amplified for transmission through the satellite transponder. The transmissions would be received by the central location and stored for further processing.

### Application 3 - Access to multiple resources on a single satellite by multiple uplinking sites

In this application multiple uplinking earth stations require access through multiple satellite resources on a single satellite. The uplinking earth stations contend for access time to the individual satellite resources. The control system can be used to support a variety of analog or digital transmission formats, but only one transmission format would be used in any specific application. For instance, the control system could manage multiple analog video transmissions through multiple transponders or multiple digital transmissions through a single or multiple transponders.

In this example, multiple uplinking sites are transmitting digitized video broadcasts to a centralized location using one of several Frequency Division Multiplexed (FDM) satellite channels resident on a single satellite transponder. The channels are available on a full time basis. The control system randomly schedules access to the satellite channels by multiple sites for short periods of time.

Each uplinking earth station is outfitted with a Multicast Server, which provides the access control at the earth station. The Multicast Servers would have access to the Internet (or another communications pathway) for communications with the master arbitration server. In addition the uplinking earth station sites would have satellite modem equipment connected to the Multicast Server and satellite earth station transmission equipment. The master arbitration server will schedule access for any individual Multicast Server placed at any uplinking earth station. In this example, the Multicast Server may also implement the functionality of the local arbitration server, particularly the ability to overlay new transfer rate or time slices onto a particular transmission job.

The master arbitration server sends a message back to the requesting Multicast Server containing its transmission window on one of the available satellite channels. The master arbitration server authorizes the actual transmission over the satellite by sending the Multicast Server that is scheduled to transmit an authorizing message for the designated satellite resource. The Multicast Server needs to tune its satellite modem to the satellite channel to which it has been assigned for the duration of the transmission. (An update message may cause a subsequent reallocation). The Uplink station must continue to transmit a carrier even if it has exhausted its data until its authorization expires. If significant time remains, it may send an update message to the master arbitration server asking for an earlier expiration. No Multicast Server is authorized to begin transmitting data over the resource unless it has received an authorization message. The control system uses authorization messages as the methodology to insure that only one uplinking earth station is accessing the satellite resource at any given moment. A Multicast Server must cease carrier transmission at the exact time specified on its current authorization message.

After it has received an authorizing message from the master arbitration server, the Multicast Server manages the transmission of the data through the satellite transponder. The output of the Multicast Server is then fed to the uplinking earth stations modulation equipment that has been tuned to operate through its assigned satellite resource. The signal is then upconverted and amplified for transmission through the satellite transponder. The transmissions would be received by the central location and stored for further processing.

### Application 4: Remote Satellite Truck Transmission

In this application, a remote video truck contains a Signaling System Server and Multicast Server with an Internet link (probably wireless, e.g. cellular). Many events covered are of short duration with an indeterminate start time, and a real time feed is not required. Instead of wasting satellite bandwidth waiting for the event to begin, the truck can capture the event (either on tape, for an analog transponder, or directly digitized to the Multicast Server for a digital transponder), then request an authorization. When it receives the authorizing message, it transmits the segment. At the expiration of the authorization, it powers down the carrier, an "all clear" indication is given to the operator, and the truck may be moved.

### Application 5: Virtual Teleport

Several uplink stations managed by the same master arbitration server for a specific satellite may have facilities to reach satellites not available to other members of the group. For example, an East Coast uplink station may be part of the same group as a West Coast uplink station looking at a satellite with continental US coverage. The East Coast uplink station may also have access to a European satellite, and the West Coast uplink station may have access to an Asian satellite. If master arbitration servers control resources on all satellites a Virtual. worldwide teleport may be established for scheduling resources between Europe and Asia, or any other two points.

### Application 6: Real Time TDM Based Telecommunication, including Video Conferencing

Using the real time Time Division Multiplexing strategy outlined above, it will be possible to use an master arbitration server to assemble groups of managed clients for teleconferences. Existing videoconferencing equipment may be used. Only a small additional delay over and above a single satellite delay (probably on the order of 50 milliseconds for five interactive participants) will be incurred. Any number of additional sites may participate in a receive only mode with the appropriate Signaling System Server.

The foregoing is provided for purposes of illustrating, explaining and describing several embodiments of the present invention. Modifications and adaptations to these embodiments will be apparent to those of ordinary skill in the art and may be made without departing from the scope of the invention and the following claims. Also, the embodiments described in this document in no way limit the scope of the below claims as persons skilled in this art recognize that the present invention can be easily modified for use with other devices and systems.

## Claims

1. A method for managing a satellite data network comprising the steps of:-
(i) providing master control (110, 220, 300, 410, 510, 722, 820) of initial allocation of bandwidth and/or time slice for a first transmission; and,
(ii) providing information concerning the initial allocation to multiple, geographically distributed local control (120, 302, 520, 720, 810) for coupling to one or more transmission facilities (130, 210, 350);
**characterised by the steps of:**
(iii) providing the allocation information by an out-of-band communications facility (160, 310) between master (110, 220, 300, 410, 510, 722, 820) and local controls (120, 302, 520, 720, 810); and,
(iv) permitting local control of bandwidth and/or time slice of a second transmission over the network (100) in accordance with the allocation information.

2. A method as claimed in claim 1 **and further characterised in that step (iv)** is based upon an allocation command.

3. A method as claimed in claim 1 or claim 2 **and further characterised by the steps of-**
(i) storing at a master allocation server (110, 220, 300, 410, 510, 722, 820) computer information (112) concerning the capacity of channels within a network (100);
(ii) receiving at the master allocation server requests for access to communication channels within the network, wherein each request contains at least some information relevant to setting the priority to be assigned the request;
(iii) forwarding information assigning a selected request for priority, a channel, and an initial bandwidth and/or time slice for a particular request for a transmission via the out-of-band communications facility (160, 310) to a local allocation server (120, 302, 520, 720, 810);
and,
(iv) causing the local allocation server to either adopt the initial bandwidth and/or time slice or to assign the request a different bandwidth, one or more different time slices, or both.

4. A method as claimed in any of claims 1 to 3 **and further characterised by the step of** contacting recipients (150, 230, 530) of the transmission in order to confirm receipt thereof.

5. A method as claimed in any of claims 1 to 4 **and further characterised by the step of** contacting recipients (150, 230, 530) of the transmission to be transmitted over the network (100) to inform the recipients of a transmission time.

6. A method according to any of claims 1 to 5 **and further characterised by the step** of sending an authorizing message before any transmission over an uplink station (130, 350).

7. A method as claimed in any of claims 3 to 6 **and further characterised by the step of** receiving data at the local allocation server (120, 302, 520, 720, 810) describing the capacity or performance of communications equipment (150) coupled to the local allocation server.

8. A system for managing a satellite data network comprising:-
(i) at least one master arbitration server (110, 220, 300, 410, 510, 722, 820) for making at least initial resource allocations of bandwidth and/or time slice for a first transmission, information on which initial allocations are provided to each of;
(ii) at least two local arbitration servers (120, 302, 520, 720, 810), each of which is operatively connected to a satellite transmission system (130, 210, 350)
**characterised in that:-**
(iii) an out-of-band communications facility (160, 320) is provided between master (110, 220, 300, 410, 510, 722, 820) and local controls (120, 302, 520, 720, 810);
and,
(iv) each local arbitration server (120, 302, 520, 720, 810) is adapted to:-
(a) dynamically evaluate each request for transmission to determine whether to overlay upon the initial allocations an adjusted allocation changing the bandwidth and/or time slice associated with each request;
and,
(b) communicate with the master arbitration server (110, 220, 300, 410, 510, 722, 820) via the out-of-band communications facility for information regarding any changes to the bandwidth and/or time slice.

9. A system as claimed in claim 8 **and further characterised in that** the or each master arbitration server (110, 220, 300, 410, 510, 722, 820) and each local arbitration server (120, 302, 520, 720, 810) is arranged to overlay, adaptively, dynamically or both, bandwidth and/or time slice allocations upon a transmission job for transmitting across a communication network (100) and based upon the priorities of the jobs assigned to each local arbitration server; thereby to ensure efficient use of resources in the communication network.

## Patentansprüche

1. Verfahren für das Verwalten eines Satelliten-Datennetzwerks mit folgenden Schritten:
(i) Zur-Verfügung-Stellen einer zentralen Steuerung (110, 220, 300, 410, 510, 722, 820) für eine Anfangszuweisung einer Bandbreite und/oder eines Zeitschlitzes für eine erste Übertragung; und
(ii) Zur-Verfügung-Stellen einer Information bezüglich der Anfangszuweisung an mehrere, geographisch verteilte lokale Steuerungen (120, 302, 520, 720, 810) zur Kopplung an eine oder mehrere Übertragungseinrichtungen (130, 210, 350);
**dadurch gekennzeichnet, dass**
(iii) die Zuweisungsinformation durch eine Außerband-Kommunikationseinrichtung (160, 310) zwischen der zentralen Steuerung (110, 220, 300, 410, 510, 722, 820) und den lokalen Steuerungen (120, 302, 520, 720, 810) zur Verfügung gestellt wird; und
(iv) eine lokale Steuerung der Bandbreite und/oder des Zeitschlitzes einer zweiten Übertragung über das Netzwerk (100) in Übereinstimmung mit der Zuweisungsinformation ermöglicht wird.

2. Verfahren nach Anspruch 1
**dadurch gekennzeichnet, dass**
Schritt (iv) auf einem Zuweisungskommando beruht.

3. Verfahren nach einem der Ansprüche 1 ode 2
**gekennzeichnet durch** folgende Schritte:
(i) Speicherung einer Rechnerinformation (112) über eine Kapazität der Kanäle innerhalb des Netzwerkes (100) auf einem zentralen Zuweisungsserver (110, 220, 300, 410, 510, 722, 820);
(ii) Empfang von Anfragen für den Zugriff auf Kommunikationskanäle innerhalb des Netzwerkes am zentralen Zuweisungsserver, wobei jede Anfrage wenigstens einige Informationen enthält, die für das Setzen der Priorität relevant sind, mit der die Anfrage zugewiesen wird;
(iii) Weiterleitung von Informationen, um einem lokalen Zuweisungsserver (120, 302, 520, 720, 810) eine ausgewählte Prioritätsanfrage, einen Kanal und eine Anfangsbandbreite und/oder einen Zeitschlitz, für eine bestimmte Übertragungsanfrage über die Außerband-Kommunikationseinrichtung (160, 310) zuzuweisen; und
(iv) Bewirken dessen, dass der lokale Zuweisungsserver entweder die Anfangsbandbreite und/oder den Zeitschlitz akzeptiert oder dass er der Anfrage entweder eine andere Bandbreite, eine oder mehrere unterschiedliche Zeitschlitze oder Beides zuweist.

4. Verfahren nach einem der Ansprüche 1 - 3
**gekennzeichnet durch**
den Schritt des Kontaktierens von Empfängern (150, 230, 530) der Übertragung, um den Empfang **durch** diese zu bestätigen.

5. Verfahren nach einem der Ansprüche 1 - 4
**gekennzeichnet durch**
den Schritt des Kontaktierens der Empfänger (150, 230, 530) der Übertragung, die über das Netzwerk (100) erfolgen soll, um den Empfänger über eine Übertragungszeit zu informieren.

6. Verfahren nach einem der Ansprüche 1 - 5
**gekennzeichnet durch**
den Schritt des Sendens einer Autorisierungsmeldung vor jeder Übertragung über eine Up-Link-Station (130, 350).

7. Verfahren nach einem der Ansprüche 3 - 6
**gekennzeichnet durch**
den Schritt des Empfangens von Daten am lokalen Zuweisungsserver (120, 302, 520, 720, 810), die die Kapazität oder das Betriebsverhalten der Übertragungsanlage (150) beschreiben, die mit dem lokalen Zuweisungsserver gekoppelt ist.

8. System für das Verwalten eines Satelliten-Datennetzwerkes mit:
(i) wenigstens einem zentralen Arbitration-Server (110, 220, 300, 410, 510, 722, 820) für mindestens eine Anfangszuweisung von Bandbreitenressourcen und/oder eines Zeitschlitzes für eine erste Übertragung, und zur Information über die Anfangszuweisungen die zur Verfügung gestellt werden, an
(ii) wenigstens zwei lokalen Arbitration-Servern (120, 302, 520, 720, 810), wobei jeder wirkungsmäßig mit einem Satellitenübertragungssystem (130, 210, 350) verbunden ist,
**dadurch gekennzeichnet, dass**
(iii) eine Außerband-Kommunikationseinrichtung (160, 310) zwischen der zentralen Steuerung (110, 220, 300, 410, 510, 722, 820) und den lokalen Steuerungen (120, 302, 520, 720, 810) zur Verfügung gestellt wird und
(iv) der oder jeder lokale Arbitration-Server (120, 302, 520, 720, 810) ausgebildet ist für:
a) eine dynamische Auswertung jeder Übertragungsanfrage, um zu bestimmen, ob die Anfangszuweisungen von einer angepassten Zuweisung zu überlagern sind, bei der die Bandbreite und/oder der Zeitschlitz, der mit jeder Anfrage verbunden ist, geändert wird; und
b) eine Kommunikation mit dem zentralen Arbitration-Server (110, 220, 300, 410, 510, 722, 820) über die Außerband-Kommunikationseinrichtung, bezüglich der Informationen über Veränderungen der Bandbreite und/oder des Zeitschlitzes.

9. System nach Anspruch 8
**dadurch gekennzeichnet, dass**
wenigstens ein zentraler Arbitration-Server (110, 220, 300, 410, 510, 722, 820) und jeder lokale Arbitration-Server (120, 302, 520, 720, 810) so angeordnet sind, dass sie die Zuweisung der Bandbreite und/oder der Zeitschlitze bei einem Übertragungsauftrag für das Übertragen über ein Kommunikationsnetzwerk (100) und basierend auf den Prioritäten der Aufträge, die jedem lokalen Arbitration-Server zugewiesen sind, entweder adaptiv, dynamisch oder auf beide Weise überlagern, um die effiziente Nutzung von Ressourcen im Kommunikationsnetzwerk sicherzustellen.

## Revendications

1. Procédé pour gérer un réseau de données de satellite comprenant les étapes consistant à :
(i) fournir un contrôle maître (110, 220, 300, 410, 510, 722, 820) d'une allocation initiale de largeur de bande et/ou de tranche horaire pour une première transmission ;
et,
(ii) fournir des informations concernant l'allocation initiale à des contrôles locaux multiples répartis géographiquement (120, 302, 520, 720, 810) pour couplage avec une ou plusieurs installations de transmission (130, 210, 350) ;
**caractérisé par** les étapes consistant à :
(iii) fournir les informations d'allocation par une installation de communications hors-bande (160, 310) entre le contrôle maître (110, 220, 300, 410, 510, 722, 820) et les contrôles locaux (120, 302, 520, 720, 810) ;
et,
(iv) permettre un contrôle local de largeur de bande et/ou de tranche horaire d'une seconde transmission sur le réseau (100) en accord avec les informations d'allocation.

2. Procédé selon la revendication 1 et **caractérisé en outre en ce que** l'étape (iv) est basée sur une commande d'allocation.

3. Procédé selon la revendication 1 ou la revendication 2 et **caractérisé en outre par** les étapes consistant à
(i) stocker sur un serveur d'allocation maître (110, 220, 300, 410, 510, 722, 820) des données informatiques (112) concernant la capacité de canaux à l'intérieur d'un réseau (100) ;
(ii) recevoir sur le serveur d'allocation maître des requêtes d'accès à des canaux de communication à l'intérieur du réseau, chaque requête contenant au moins des informations pertinentes pour établir la priorité à affecter à la requête ;
(iii) transférer à un serveur d'allocation local (120, 302, 520, 720, 810) des informations affectant une requête sélectionnée de priorité, un canal, et une largeur de bande initiale et/ou une tranche horaire pour une requête particulière pour une transmission via l'installation de communications hors-bande (160, 310) ;
et,
(iv) amener le serveur d'allocation local soit à adopter la largeur de bande et/ou la tranche horaire initiales soit à affecter à la requête une largeur de bande différente, une ou plusieurs tranches horaires différentes, ou les deux.

4. Procédé selon l'une quelconque des revendications 1 à 3 et **caractérisé en outre par** l'étape consistant à contacter les destinataires (150, 230, 530) de la transmission afin d'en accuser réception.

5. Procédé selon l'une quelconque des revendications 1 à 4 et **caractérisé en outre par** l'étape consistant à contacter les destinataires (150, 230, 530) de la transmission à transmettre sur le réseau (100) pour informer les destinataires d'une heure de transmission.

6. Procédé selon l'une quelconque des revendications 1 à 5 et **caractérisé en outre par** l'étape consistant à envoyer un message d'autorisation avant toute transmission sur une station de liaison montante (130, 350).

7. Procédé selon l'une quelconque des revendications 3 à 6 et **caractérisé en outre par** l'étape consistant à recevoir des données sur le serveur d'allocation local (120, 302, 520, 720, 810) décrivant la capacité ou la performance d'une installation de communications (150) couplée au serveur d'allocation local.

8. Système de gestion d'un réseau de données de satellite comprenant :
(i) au moins un serveur d'arbitrage maître (110, 220, 300, 410, 510, 722, 820) pour effectuer au moins les allocations de ressources initiales de largeur de bande et/ou de tranche horaire pour une première transmission, des informations sur quelles allocations initiales sont fournies à chacune ;
(ii) au moins deux serveurs d'arbitrage locaux (120, 302, 520, 720, 810), chacun d'eux étant connecté fonctionnellement à un système de transmission par satellite (130, 210, 350)
**caractérisé en ce que** :
(iii) une installation de communications hors-bande (160, 310) est fourni entre le contrôle maître (110, 220, 300, 410, 510, 722, 820) et les contrôles locaux (120, 302, 520, 720, 810) ;
et,
(iv) chaque serveur d'arbitrage local (120, 302, 520, 720, 810) est adapté pour :
(a) évaluer dynamiquement chaque requête de transmission pour déterminer s'il faut superposer sur les allocations initiales une allocation ajustée modifiant la largeur de bande et/ou la tranche horaire associée à chaque requête ;
et,
(b) communiquer avec le serveur d'arbitrage maître (110, 220, 300, 410, 510, 722, 820) via l'installation de communications hors-bande pour des informations concernant toutes modifications de la largeur de bande et/ou de la tranche horaire.

9. Système selon la revendication 8 et **caractérisé en outre en ce que** le ou chaque serveur d'arbitrage maître (110, 220, 300, 410, 510, 722, 820) et chaque serveur d'arbitrage local (120, 302, 520, 720, 810) est agencé pour superposer, de façon adaptative, dynamique ou les deux, les allocations de largeur de bande et/ou de tranche horaire sur une tâche de transmission pour transmission à travers un réseau de communication (100) et sur la base des priorités des tâches affectées à chaque serveur d'arbitrage local ; pour assurer de la sorte une utilisation efficace des ressources dans le réseau de communication.
